Europäisches Patentamt

European Patent Office

Office européen des brevets

(11) Publication number: **0 354 684**
**A2**

# EUROPEAN PATENT APPLICATION

(21) Application number: 89307605.9

(51) Int. Cl.[4] **G08G 1/09**

(22) Date of filing: 25.07.89

(30) Priority: **09.08.88 GB 8818864**

(43) Date of publication of application:
**14.02.90 Bulletin 90/07**

(84) Designated Contracting States:
**AT BE CH DE ES FR GB GR IT LI LU NL SE**

(71) Applicant: **PLESSEY OVERSEAS LIMITED**
**Vicarage Lane**
**Ilford Essex IG1 4AQ(GB)**

(72) Inventor: **Marchent, Brian Gerald**
**9 Mount Temple**
**Romsey Hants, SO51 8UW(GB)**

(74) Representative: **Lupton, Frederick**
**The Plessey Company plc Intellectual**
**Property Dept. Vicarage Lane**
**Ilford, Essex IG1 4AQ(GB)**

(54) Road vehicle route selection and guidance systems.

(57) Beacons distributed over a designated geographical area broadcasting route guidance information to passing vehicles, and one or more vehicles each equipped with the compass, odometer, computer including display and data entry means, a receiver for receiving information from a beacon, the information being presented in the form of nodes and route links between the nodes, where the information is relatively detailed in a first area immediately surrounding the beacon, and the information is relatively sparse in second areas further away than the first area and nodes are defined in terms of a hierarchical code (as herein defined) of the form

$$C = \sum_{i=1}^{n} Di,$$

wherein nodes in said second areas are defined in terms of code elements $Di$ and nodes in said first area in terms of code elements $Di+j$, and where the intended destination is entered into said computer by said data entry means in terms of an identifying hierarchical code.

EP 0 354 684 A2

## ROAD VEHICLE ROUTE SELECTION AND GUIDANCE SYSTEMS

This invention relates to road vehicle route selection and guidance systems.

Road vehicle route selection and guidance systems usually comprise a compass, odometer, computer including VDU and keyboard within the vehicle so that at the beginning of a journey, the driver keys into the computer his intended destination and the computer computes from information of the vehicle position and information regarding the road network stored within the computer or transmitted to the computer from an external system the route which should be taken by the vehicle and displays appropriate instructions on the VDU.

Known road vehicle route selection and guidance systems fall into two main categories, namely self-contained systems and infrastructure based systems. With self-contained systems, a mass storage device such as a compact disc player located in the vehicle carries a complete detailed road map in digital form. Thus for example a 500 Mbyte compact disc can carry a detailed road map of the whole of the UK region having a resolution to street level. An associated computer within the vehicle works out a proposed route from the destination keyed in by the driver, and with the aid of an odometer and electronic magnetic compass carried by the vehicle, the route taken by the vehicle is automatically tracked, and decisions are made as to the direction the vehicle should take at the next intersection. The problems with such a device are that the mass storage device is a relatively expensive item for each vehicle and that furthermore it is not possible to update the stored map (dynamic route guidance) to take account of traffic conditions, roadworks, accidents, ice and snow, etc.

In infrastructure based systems., individual vehicles do not carry mass storage devices, merely an on-board computer with keyboard and VDU display. Beacons containing routing information are provided at intervals over the road system, as at traffic lights, etc. These beacons carry infrared transceivers which enable them to communicate with infrared transceivers mounted within each vehicle using the system.

A central computer or distributed set of computer centres usually carry a complete map of primary roads (motorways, A class roads) of the whole area served by the system. The central computer computes at frequent intervals a set of routing trees which comprise optimum routes from every beacon to every node (i.e. intersection of two or more roads) in the system . These routing trees are distributed via a data network and stored in the individual beacons. Alternatively beacons may be provided having information stored in PROM .The beacons broadcast information from their respective set of routing trees to passing vehicles, from which the on board computer of the vehicle selects the appropriate route to take. Thus the vehicle on-board computer will be provided with the routing tree set, the intended destination keyed in by the driver, the direction of the vehicle from the electronic compass and the distance travelled by the vehicle from the odometer. In certain infrastructure based systems, the beacons are distributed relatively infrequently over the road system, and there may be between adjacent beacons several nodes of the road system at which decisions are taken of the required direction. The central computer therefore transmits sufficient information which is in turn broadcast by the beacons to enable the vehicle computer to make appropriate decisions at the nodes between adjacent beacons from this information in conjunction with the position of the vehicle as computed from the compass and odometer information.

Advantages of such a system are that the computer system can acquire and use from a variety of sources up-to-date information regarding roadworks, volume of traffic, icy conditions, accidents, etc. so that it can revise routing tree calculations at frequent intervals, say every five minutes. Information can be provided of traffic conditions from passing vehicles to individual beacons and thence to the computer system. Since the computer in each vehicle has no need for mass storage, this represents a major cost reduction in each vehicle unit.

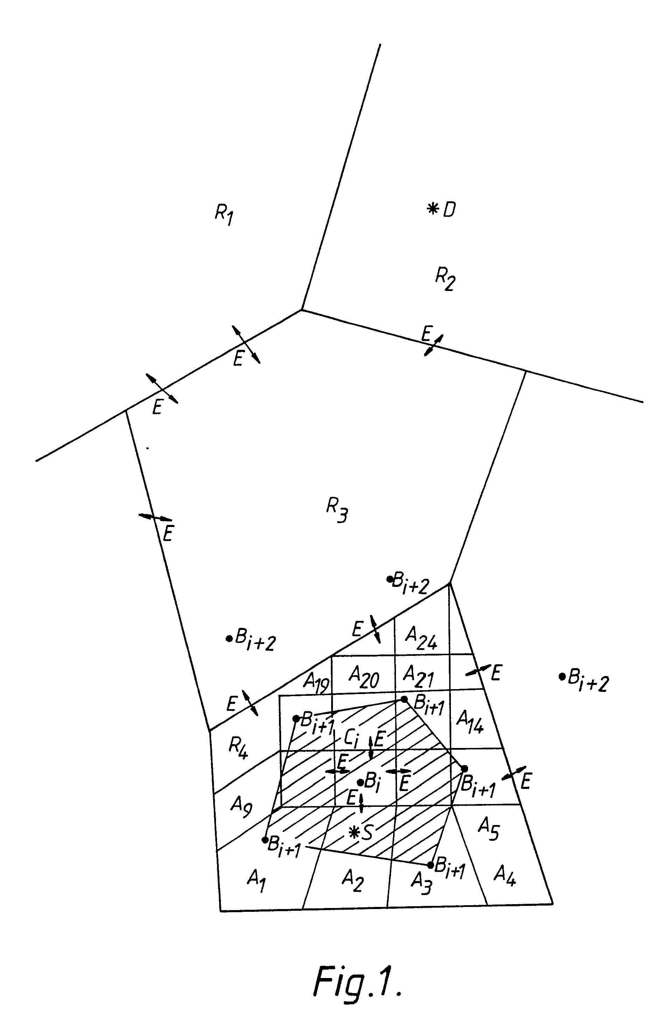

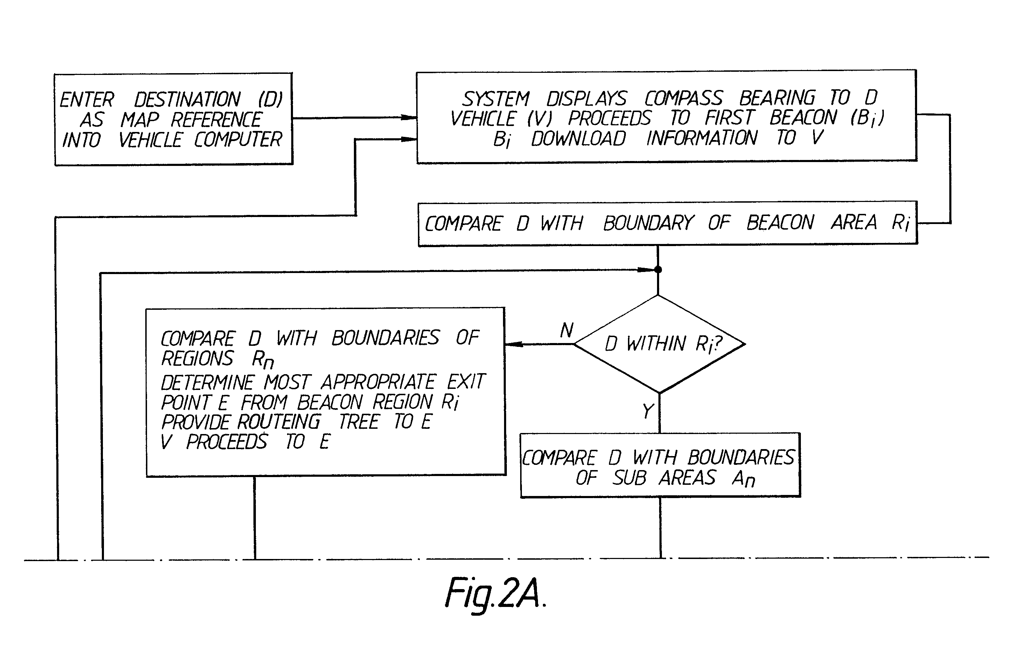

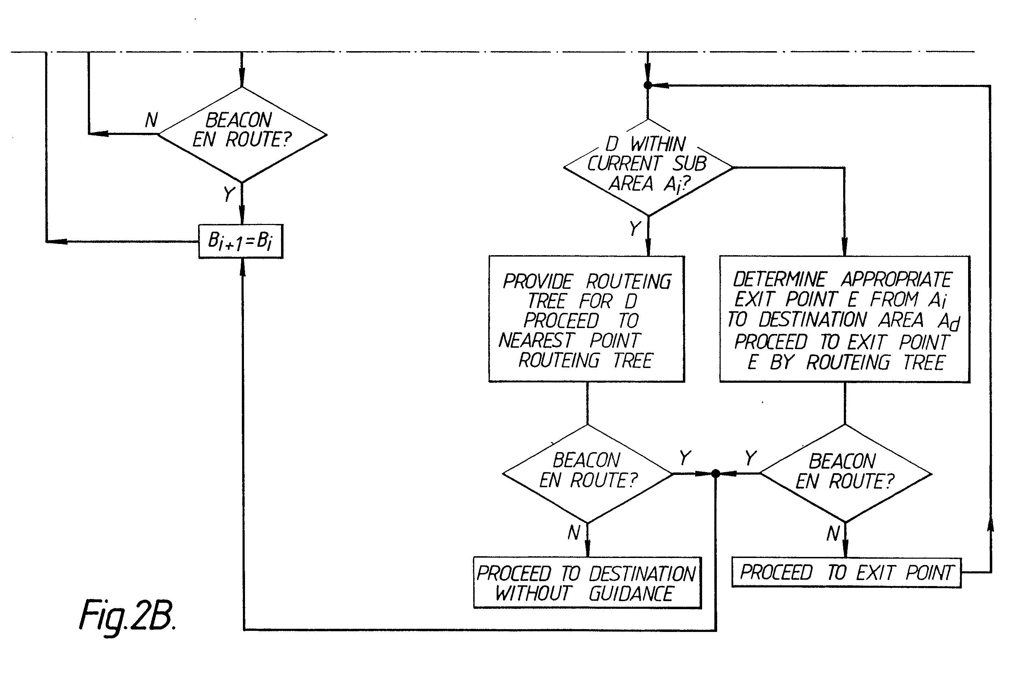

However there are a number of disadvantages and in order to appreciate these, the system will now be described in detail with reference to Figures 1 and 2

In Figure 1, a geographical area covered by the system is divided into regions R1,R2,R3,R4 etc. by polygonal boundary lines which are defined in terms of national grid map references. The boundaries have entry/exit points E. Each region, for example R4,is subdivided into areas An, typically 100 sub-areas for a highly populated region . Each area An is similarly defined by polygonal boundaries in terms of the national grid references and has entry and exit points E. Within each area An, the available routes are defined by route vectors having lengths dx, dy and routing trees are made up of these vectors. Each region Rn contains a number of beacons B ,the number depending on route density within the region. Each beacon Bi contains routing information for one or more surrounding sub-areas An up to immediately surrounding areas Bi + 1.

In operation as indicated in Figure 2 , a driver will begin a journey from a start position S by keying in his intended destination D. Normally the computer display will merely provide a compass bearing as routing information until such time as the driver reaches the first beacon Bi en route at which time about 8 kbytes of information is downloaded. The method of computation is indicated in more detail in Figure 2. Thus as a first step the perimeter of the region Ci is located in terms of map references and it is determined whether the destination D is within the area Ci. If not, the region Rn is located containing the destination, and the most suitable exit point from the beacon area Ci to region Rn is located in terms of exits from sub-areas An covered by the beacon region. If the destination D is located within the beacon region Ci, then the areas An within region Ci are searched to determine within which area Ad the destination is located. The most appropriate entry and exit points E to area Ad and any intervening region are then located. Upon entry to area Ad, the route to the destination is determined by consulting routing trees until the closest route vector to the destination is reached. Since such route vectors will not normally have close enough resolution to local street level, it will normally be necessary for the driver to determine the final mile or so of the route without route guidance.

Such a system has a number of disadvantages . Firstly it is necessary to know or determine the map reference for the destination and this may be difficult for a driver seated in a vehicle.

Secondly, the computer will not normally be able to provide more than a compass bearing at the start of the journey and it is not until the vehicle passes the first beacon en route that more complete directions will be given. This carries the disadvantage that if a beacon is located at a road junction, the vehicle may have passed through the junction by an incorrect exit before the information downloaded from the beacon is interpreted. In order to overcome the difficulty it is necessary to provide routing trees which permit the route to be recalculated should a wrong exit be taken or to provide beacons at every approach road to a junction a sufficient distance that the beacon information can be interpreted before the junction is reached.

Thirdly, if a vehicle en route between beacons deviates from the recommended route, the guidance information then is useless.

With a view to avoiding these problems, the present invention provides a road vehicle and route guidance system comprising beacons distributed over a designated geographical area broadcasting route guidance information to passing vehicles, and one or more vehicles each equipped with a compass, odometer computer including display and data entry means, a receiver for receiving information from a beacon, the information being presented in the form of nodes and route links between the nodes, where the information is relatively detailed in a first area immediately surrounding the beacon, and the information is relatively sparse in second areas further away than the first area and nodes are defined in terms of a hierarchical code (as herein defined) of the form

$$C = \sum_{i=1}^{n} D_i,$$

wherein nodes in said second areas are defined in terms of code elements $D_i$ and nodes in said first area in terms of code elements $D_{i+j}$, and where the intended destination is entered into said computer by said data entry means in terms of an identifying hierarchical code.

For the purposes of this specification, a hierarchical code will be defined as $C = D_1 D_2 ... D_i ... D_n$, where $n \geq 2$, where $D_i$ represents a relatively large geographical area and $D_{i+1}$ represents a smaller geographical area lying within $D_i$.

A preferred example of such a hierarchical code is the post code assigned by the UK post office to addresses within the UK. For example in the post code SO51 OZN, SO refers to the area surrounding Southampton, 51 refers to a subdivision of the Southampton area (there may be for example a total of 100 subdivisions ) , 0 refers to a particular area within the 51st subdivision, e.g. a street (there may be 10 such areas), and the letters ZN refer to a house or group of houses or other establishment within the 0th area (there may be $26*26 = 676$ such groups ). Thus such a code is in the form $C = D_1 D_2 D_3 D_4$ and permits a very fine geographical area resolution over the UK, to within a single postal address.

There are other examples of hierarchical codes for example U.S. postal zip codes although these are not as finely resolved. Another example is a full postal address, although this would normally be too inconvenient to type into an on-board computer. In addition a map grid reference may be regarded as a hierarchical code.

A preferred embodiment of the invention will now be described with reference to the accompanying drawings, wherein:-

Figure 1 is a schematic view illustrating the method of organising routing information in a known road vehicle route selection and guidance system;

Figure 2 is a flow chart illustrating the method of operation of the system of Figure 1;

Figure 3 is a schematic view of the road vehicle route selection and guidance system according to the invention;

Figure 4 is a schematic view in more detail of a vehicle forming part of the system;

Figure 5 is a block diagram of part of the electrical circuitry associated with a road vehicle and beacon of the system of Figure 1;

Figure 6 is a diagram illustrating the method of organising routing information in the system according to the invention:and

Figure 7 is a flow chart illustrating the method of operation of the system of the invention

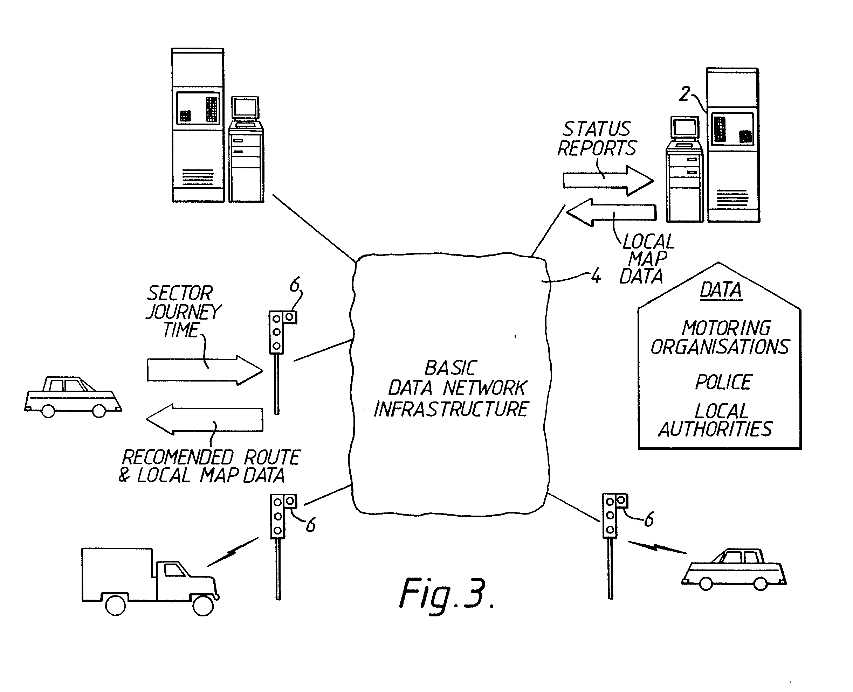

Referring now to the drawings, Figure 3 shows a schematic view of the road vehicle route selection and guidance system as comprising a central computer centre 2 comprising a large computer system with associated storage capabilities and storing data concerning the road system for a particular area, for example, the United Kingdom in great detail, down to a local area resolution on a street - by street basis. The computer centre continuously receives data by telecommunications links directly from vehicles within the system from motoring organisations, Police and Local Authorities concerning recent incidents likely to affect the road system, for example, road works, road accidents, or icy or fog conditions which make certain routes impractical. Thus the information stored by the computer centre can be updated on a very recent basis. The computer centre operates to compute a set of routing trees for the primary routes of the road system, namely Motorways, A routes and some principal B routes and the nodes between the routes, so as to provide optimum routes from every beacon in the system (about 15000 for full UK coverage) to every node or centres of groups of modes defined in terms of a hierarchical code in the system.

The beacons are distributed at relatively infrequent intervals over the road system, and there are far fewer beacons than nodes. It is therefore necessary for the computer centre to develop route instructions so as to provide appropriate directions for the vehicle at each node. The computer centre communicates with the beacons by a data telecommunications network 4 which may be any convenient data network, for example the public telecommunication system, satellite links, or fibre optical links. The beacons of the system are indicated as 6 and are located on major roads, for example, at traffic intersections and may physically be disposed on a set of traffic lights.

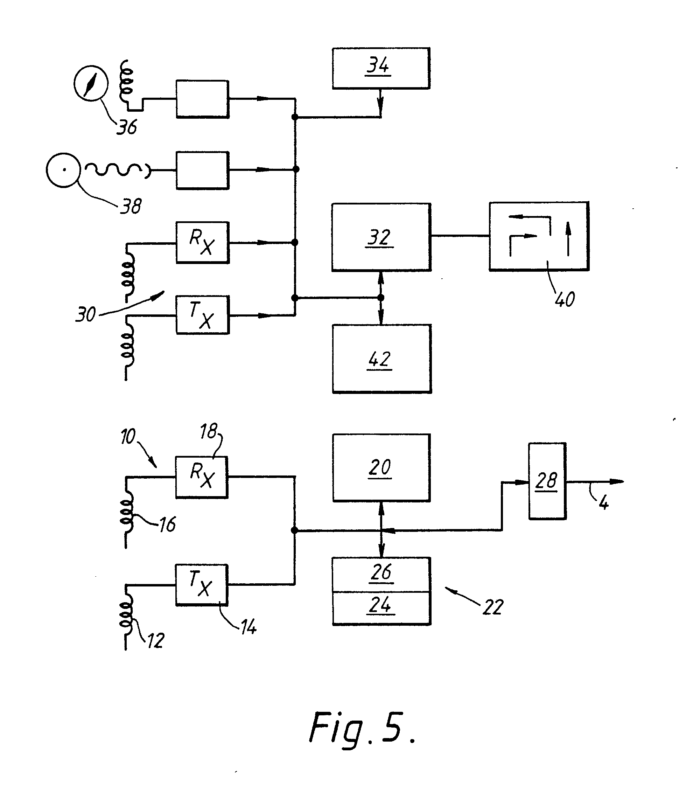

Each beacon 6 comprises as is shown in more detail in Figure 5 a transceiver 10 which emits electro-magnetic radiation, preferably in the infra red range, usually about 950 nanometres. Being located at a set of traffic lights the transceiver will be constructed as a unit to be bolted on to the traffic lights, as though it were a further light of the traffic light system. Alternatively the beam can be mounted separately from traffic lights, e.g. for a roundabout where there are no traffic lights. The transceiver will be directed towards oncoming motorists, but will be transmitting non-visible infra red radiation. The transceiver comprises a transmitting element 12 which may be constructed as an integrated circuit coupled to a transmitter circuit 14 which transmits to element 12 digital modulation signals for pulse code modulation of the infra red radiation in a suitable modulation form, eg. Manchester code or NRZ code. A receiving element 16 sensitive to infra red radiation transmitted by an oncoming vehicle is coupled to a receiver 18 which demodulates the information in the incoming signal and transmits the information to a microprocessor 20 which processes the information. Microprocessor 20 is coupled to a memory store 22 which has a first area 24 storing a set of routing trees and a second area 26 storing a detailed map of the local area. The area of the local map may vary between a small area, 1km. square for high density housing areas in towns to large areas, 400 km. square, in rural areas. A gateway 28 interconnects microprocessor 20 with data communication network 4.

As an alternative the gateway 28 may be omitted, and the memory 22 may comprise a Plug-in EPROM, storing routing information. As an alternative to infrared radiation, microwave or RF radiation may be employed.

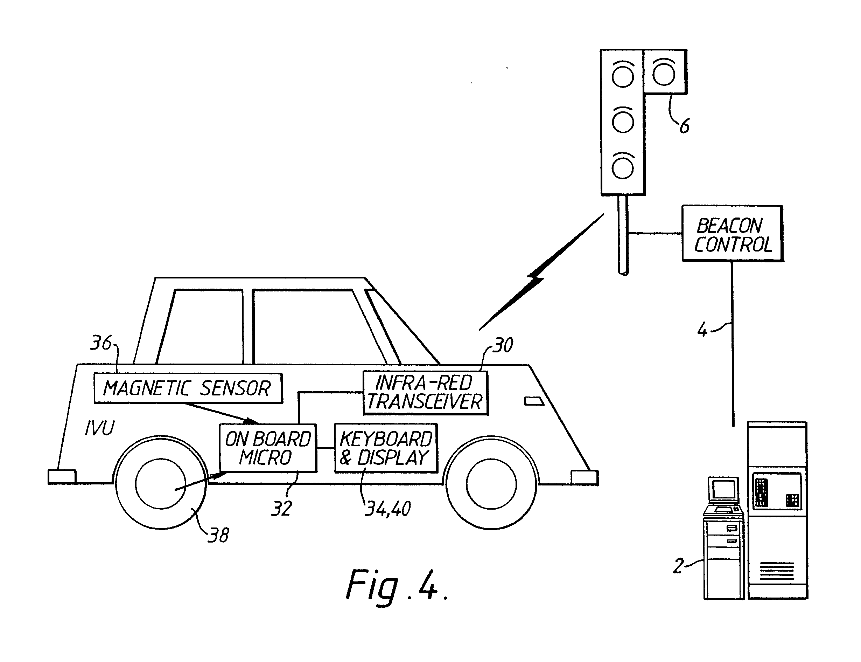

The vehicle has an infra red transceiver 30 (Figures 4 and 5) of similar construction to transceiver 10 and similar parts will be denoted by similar reference numerals. Transceiver 30 may be mounted behind the drivers windscreen for receiving the information transmitted by the beacon 6. The infra red transceiver 30 is coupled to a microprocessor system 32 which also receives data input signals from a keyboard 34, an electro-magnetic compass 36 and a vehicle wheel speed sensor 38. The micro-processor system 32 is operative to provide appropriate display signals to a VDU unit 40. The micro-processor system, referring to Figure 5 possess a store 42 which comprises integrated circuit chips defining a random access memory of a size between 10 kbytes and 250 kbytes, preferably 32 kbytes.

For simplicity of installation, the various elements within the vehicle are preferably constructed as a single unit to be mounted on the vehicle dashboard, and to be connected to the vehicle battery supply. The electronic compass is preferably of a type described in our copending application < > (F20267). The vehicle distance sensor is of a type detecting pulses from wheel rotation or speedometer cable rotation. The VDU unit 40 will have a small screen for displaying arrow signs as to the direction the driver should take, road number designations, street names and other vital and easily readable information.

Communications take place between transceivers 10 and 30 in a suitable HDLC format which provides for start codes, synchronisation codes, error recovery procedures and transmittal of data in packets of predetermined length.

Thus in operation the central computing system is constantly operative to generate sets of routing trees for each beacon 6 of the system based on up to date information. These routing trees are transmitted across the communications network 4 to each beacon 6 at appropriate intervals and stored as at 24. In addition local area maps are transmitted to each beacon and are stored in a separate section of memory 26. Having received this information, each beacon 6 continuously broadcasts this information as a series of data packets.

When a vehicle driver wishes to access the system he follows the following procedure. He types in via the keyboard in a predetermined protocol the intended destination of the vehicle setting out on his journey. when the vehicle approaches the first beacon en route located at a traffic light system or elsewhere, the transceiver within the vehicle receives the information broadcast by the beacon as a series of packets which are assembled within computer 32 and stored in RAM 42. Thus the information stored represents a set of routing trees from the beacon and a detailed local area map. The vehicle computer 32 is operative to assimilate the destination to the routing trees stored within the RAM 42 and to select from these routing trees the optimum route for the vehicle.

Having selected a route and knowing the position of the beacon in relation to the first node of the chosen route, the vehicle computer will monitor the vehicle direction by compass 36 and the vehicle distance travelled via speedometer 38. This will enable the computer to assess when the vehicle is approaching the first node en route, at which time it provides appropriate indications on the display 40 in terms of direction arrows and route numbers to enable the vehicle to take the correct exit from the node. It may be necessary for the beacon to transmit information in addition to the routing tree to enable a vehicle to proceed between certain nodes, and this will be taken into account when the vehicle computer provides appropriate directions.

Thus the vehicle will proceed from node to node until in the vicinity of the next beacon en route, when it will receive updated information which may comprise revised routing trees, directions and information specific to internodal routes adjacent the beacon and a new local area map. The vehicle will be directed past the beacon and through the next node using information from the previous beacon in view of the length of time taken for this vehicle to absorb information from a beacon.

It will be understood that the routing trees stored by each beacon relate to the nodes within a predetermined zone around the beacon, say 25 km., and thus as the vehicle absorbs information from the next beacon en route, this will provide the instructions for a new zone enabling the vehicle to proceed on its desired route.

It will be noted a major advantage of this system is that should a driver make a mistake en route by not following computer instructions, the vehicle computer will be able to access the local area map and produce revised instructions in order for the drive to regain the correct route or to provide a new route to the destination.

When the vehicle approaches its intended destination, the vehicle computer will recognise that the local area map transmitted to it contains the intended destination, and will thereupon not rely on the routing trees but will by means of the high resolution local area map, produce appropriate directions for the vehicle to proceed on a street-by-street basis.

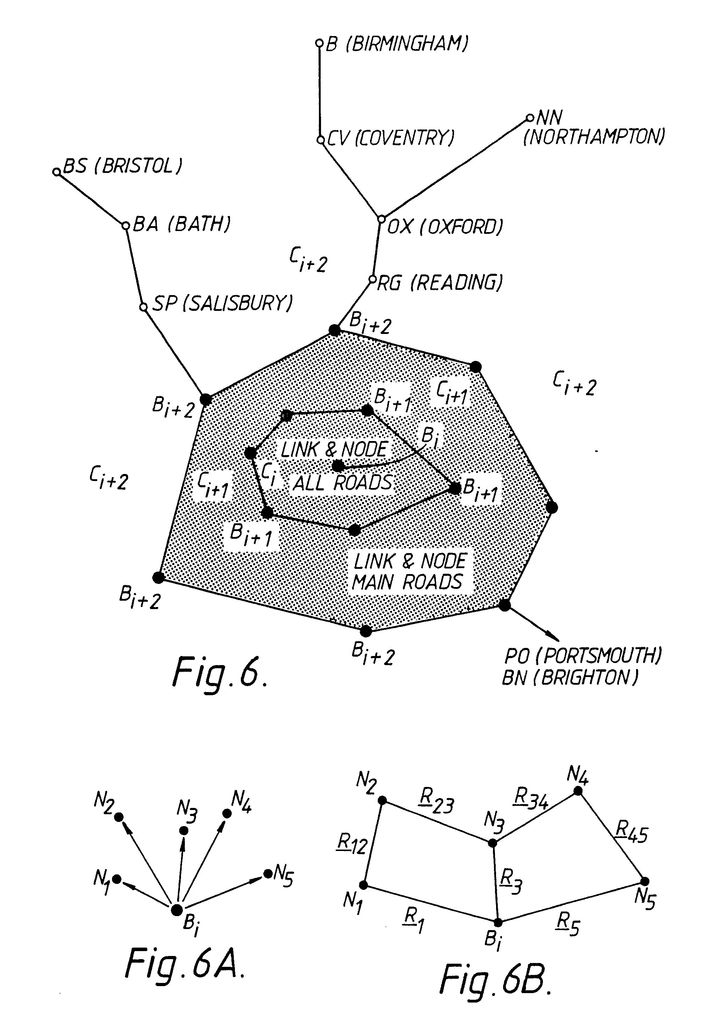

Referring now to Figure 6, this illustrates the method by which data is organised in the system according to the invention. A beacon Bi is shown which provides 32 kbytes of information to a passing vehicle. This information comprises details of all roads within an area Ci surrounding beacon Bi and bounded by adjacent beacons Bi + 1. This information is arranged in terms of a link and node structure, in which road junctions, etc., are defined as nodes and their position is given relative to the position of the beacon Bi in terms of distance and direction . The links between nodes i.e. the road sections themselves are given (for straight roads) as a vector having length and direction between nodes. Where road sections between nodes deviate significantly from a straight line, it may be necessary to define the road links in a more accurate manner to ensure the vehicle guidance system can determine that it is on the correct route.

These two items of information are indicated graphically in Figures 6A and 68. Instead of being represented as data offsets from the beacon position Bi, the data can be defined in terms of map references.

Within an area Ci + 1 bounded by adjacent beacons Bi + 1 and next adjacent beacons Bi + 2 or beyond, a similar set of information is given, but for main roads only. The nodes in the area Ci + 1 may correspond to road junctions and the links may correspond to road links. Alternatively it may be sufficient for a node to denote an area, for example one or more subdivisions of the postal code area, e.g. SO49,50,51,and the links to that node may merely denote a direction rather than any specific road link. Where the links correspond to actual road links, then the shape of the road route must be defined so that the vehicle can track its route along the road route sufficiently accurately.The areas $Ci$ and $Ci+1$ together encompass as shown the postal code area for Southampton SO. The area $Ci+2$ lying outside beacons $Bi+2$ is defined in terms of nodes, each node corresponding to a post code area, having direction and distance from beacon $Bi$, and links being defined between the nodes in terms of lines which do not necessarily correspond with the detailed road system . However if there is a convenient road route corresponding to a road link, such road route may be presented more accurately.

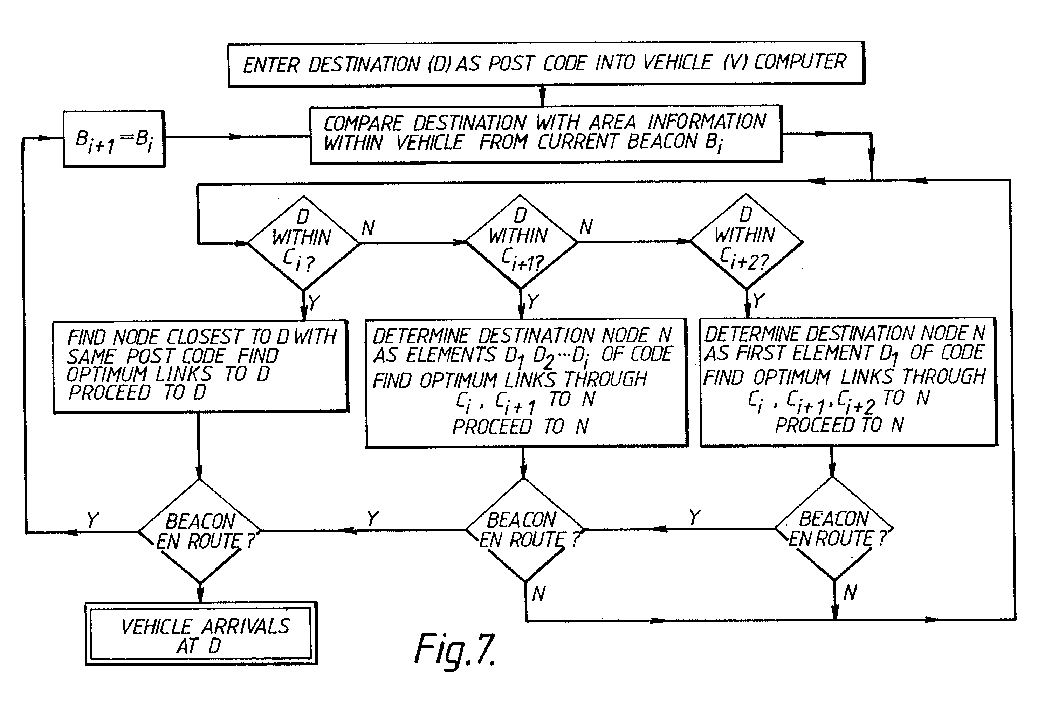

Thus in operation as illustrated in the flow chart of Figure 7, when a driver sets off from a start position S, he will key in the post code of the destination into the keyboard of the computer. The computer will contain the information loaded from the beacon $Bi$ in which start S is located, the data being in the form illustrated in Figure 6. Thus the computer is enabled immediately to compute an appropriate route for the vehicle before setting off. As a first step the destination D is located in one of the three areas $Ci,Ci+1$, $Ci+2$ . If the destination is within the area $Ci$, i.e. the region local to the beacon $Bi$, then as shown in Figure 7, the computer ascertains the node, i.e. the road junction, closest to D. This is done by finding the node having the same post code as D. Once a node is located, a route is computed in known manner as the most expedient of links between the nodes from the start S to D. The vehicle then follows the route with the compass and odometer providing the information to enable the vehicle to determine that it is following the correct route. Direction will be given by the display at road junctions, etc. If the vehicle takes a wrong route, the computer will immediately recognize this and devise an appropriate new route to direct the vehicle to its destination. This may simply be done because all the necessary information is within the computer for the local area.

If, as indicated in Figure 7, the destination is not within the local area $Ci$ but instead within an intermediate region $Ci+1$, then the computer determines the node within area $Ci+1$ which is closest to D and determines the most expedient routes as a set of nodal links between the areas $Ci$ and $Ci+1$ to destination D. The vehicle then follows the route as directed by the display and when the vehicle passes out of the area $Ci$ into the area $Ci+1$, the vehicle will normally pass a further beacon $Bi+1$

and will at that stage receive further information from beacon $Bi+1$ of the form illustrated in Figure 6 so that beacon $Bi+1$ becomes the new local beacon $Bi$. At that stage it is determined whether destination D is within the new local area $Ci$ and if so the procedure indicated in Figure 7 is followed to compute the route to the destination. If the destination is not within the local region then it is necessary for the vehicle to follow the main road route links until it reaches a beacon in the vicinity of the destination.

If when the vehicle starts from start S the destination is determined to be within the region $Ci+2$, i.e. a distant node, then the node having the same first postcode element as that of the destination is determined and the direction which the vehicle has to follow to approach the node is determined. A route is then computed in the regions $Ci$, $Ci+1$ to approach the links in the area $Ci+2$ for the destination node. The vehicle then follows the route as displayed by the display of the computer until it reaches the first beacon en route forming a boundary between areas $Ci$ and $Ci+1$. At this stage a new block of information is downloaded from the beacon and beacon $Bi+1$ becomes the new local beacon $Bi$ and a check is made to see whether the destination is within the new areas $Ci$ or $Ci+1$ or still within the distant region $Ci+2$. Depending on the result of this determination, the vehicle follows one of the procedures outlined above and illustrated in Figure 7. In this way, the vehicle proceeds from the instructions for a distant region $Ci+2$, to an intermediate region $Ci+1$ to the local area $Ci$. It will be noted that at all stages if a vehicle takes a wrong route, it will nevertheless immediately be guided back to an appropriate route since it will contain local area route information from the local beacon $Bi$.

The amount of information which is downloaded from each beacon is 32 kbytes; this may be compared with 8 kBytes which is downloaded from known systems but this is not an excessive amount of data to deal with .

The advantages of the system according to the invention may thus be appreciated . Firstly the definition of destinations in terms of postcodes is a very much simpler operation for the driver than having to determine and enter a map reference. Secondly, as soon as the driver starts from the start point, he will have an appropriate route worked out for him. In known systems, all that is provided as an initial step is a compass direction until such time as the first beacon en route is located. Thirdly if a vehicle at any time makes a wrong turning a new route will immediately be located. Fourthly it is possible for the vehicle to be directed directly to its destination rather than an area containing the destination. Fifthly there are no difficulties in downloading information from a beacon at a road junction as with known systems. With known systems when the vehicle approaches the first beacon en route it does not contain appropriate routing information and, the vehicle may well take a wrong turning from the node at which the beacon is located. This requires complicated rerouteing procedures whereas with the present invention since the vehicle is already being directed from information stored within it, it will be correctly directed at the junction at which the beacon is located.

Various modifications and improvements may be made to the above described system without departing from the scope of the invention claimed, as follows:-

1) Road link data can be included beyond the next beacon for vehicle navigation to cover the case of communication failure as the vehicle passes the next beacon or if the vehicle drives along a back street and misses the next beacon. This concept can be extend for a number of missed beacons but will require more data in the beacon data structure.

2) Attributes can be added to road links (e.g. low bridge of 4.5m, weigh limit 5 tonnes, buses only, taxis only etc) so alternative guidance can be provided for a wide range of vehicle types.

3) The system can search for the nearest acceptable road link. Thus recovery is possible after departure from known road network, e.g. to enter a car park or to travel along a road which is not included in the known road network.

4) The addition of attributes to links in local and distant regions (e.g. road number, milestones, journey time) would provide rough route preview and estimated time of arrival at the destination. This could be updated on passing each beacon.

5) The route provided may change after passing the next beacon to reflect changing road conditions, e.g. congestion or accident on the previous route.

6) If required, the link and node data structure could enable a map display to be provided to the vehicle driver or co-driver. This map could shift and reorientate as the vehicle manoeuvres.

7) Alternative vehicle location techniques between beacon could be used to replace or supplement the compass and odometer system (e.g. radio location techniques, satellite position location).

8) Map storage of the road network could be included in the vehicle in some form of plug in module, e.g. compact disc of PROM. This could provide coarse road network data for the whole country. This could provide road network data in a link and node structure similar to that received from the beacons. Route selection could be derived from a combination of the map storage and beacon data. This could provide a more detailed route preview with the beacons providing detailed road network and link time for the immediate vicinity of the beacon.

9) Direct communications with the vehicle, possibly of limited bandwidth, could be considered as an enhancement. A direct radio link or data output from RDS (Radio Data System for data added to standard VHF/FM radio transmitters) could provide updated road link information of congestion and accidents. In this way the vehicle could adjust the information received from the last beacon to reflect changing link times and to provide a new route to avoid the congestion. This would be useful if there is a long delay before the vehicle passes the next beacon and a delay before the vehicle is aware of congestion on its intended route.

## Claims

1. A road vehicle route selection and guidance system, comprising: beacons distributed over a designated geographical area broadcasting route guidance information to passing vehicles, and one or more vehicles each equipped with a compass, odometer, computer including display and data entry means, a receiver for receiving information from a beacon, the information being presented in the form of nodes and route links between the nodes, where the information is relatively detailed in a first area immediately surrounding the beacon, and the information is relatively sparse in second areas further away than the first area and nodes are defined in terms of a hierarchical code (as herein defined) of the form

$$C = \sum_{i=1}^{n} D_i,$$

wherein nodes in said second areas are defined in terms of code elements $D_i$ and nodes in said first area in terms of code elements $D_{i+j}$, and where the intended destination is entered into said computer by said data entry means in terms of an identifying hierarchical code.

2. A system as claimed in claim 1 wherein the hierarchical code comprises a post code of the form $C = D_1D_2D_3D_4$.

3. A system as claimed in claim 1 or 2 wherein the second areas are divided into distant areas and intermediate areas intermediate said first area and said distant areas, wherein the route links in said first area define substantially all local roads, the route links in said intermediate areas define main roads and the nodes define main links between the main roads, and the route links in said distant areas define a direction to a central part of the distant area.

4. A system as claimed in claim 3 wherein nodes in said distant areas are defined in terms of the first code element on the hierarchical code, and nodes in said intermediate areas are defined in time of the second code element of the hierarchical code.

5. A system as claimed in claim 4 wherein grid map references are additionally employed to define said nodes.

6. A system as claimed in any preceding claim wherein nodes and route links in said first area are defined as offsets from an initial beacon position.

7. A system as claimed in claim 1 and substantially as described with reference to figures 6 and 7 of the accompanying drawings.

Fig.1.

EP 0 354 684 A2

```
┌─────────────────────────┐          ┌──────────────────────────────────────────┐
│ ENTER   DESTINATION  (D) │          │ SYSTEM  DISPLAYS  COMPASS  BEARING  TO  D  │
│    AS   MAP  REFERENCE   │─────────▶│ VEHICLE (V)  PROCEEDS  TO FIRST BEACON (Bᵢ) │
│ INTO   VEHICLE  COMPUTER │      ┌──▶│    Bᵢ   DOWNLOAD   INFORMATION   TO  V      │
└─────────────────────────┘      │   └──────────────────────────────────────────┘
                                 │
                                 │   ┌──────────────────────────────────────────┐
                                 │   │ COMPARE  D  WITH   BOUNDARY  OF  BEACON  AREA  Rᵢ │
                                 │   └──────────────────────────────────────────┘
```

COMPARE D WITH BOUNDARIES OF REGIONS $R_n$
DETERMINE MOST APPROPRIATE EXIT POINT E FROM BEACON REGION $R_i$
PROVIDE ROUTEING TREE TO E
V PROCEEDS TO E

N   D WITHIN $R_i$?

Y

COMPARE D WITH BOUNDARIES OF SUB AREAS $A_n$

Fig.2A.

Fig.2B.

Fig.3.

Fig. 4.

*Fig.5.*

Fig.6.

Fig.6A.

Fig.6B.

ENTER DESTINATION (D) AS POST CODE INTO VEHICLE (V) COMPUTER

$B_{i+1}=B_i$

COMPARE DESTINATION WITH AREA INFORMATION WITHIN VEHICLE FROM CURRENT BEACON $B_i$

D WITHIN $C_i$? — N — D WITHIN $C_{i+1}$? — N — D WITHIN $C_{i+2}$?

FIND NODE CLOSEST TO D WITH SAME POST CODE FIND OPTIMUM LINKS TO D PROCEED TO D

DETERMINE DESTINATION NODE N AS ELEMENTS $D_1 D_2 \cdots D_i$ OF CODE FIND OPTIMUM LINKS THROUGH $C_i$, $C_{i+1}$ TO N PROCEED TO N

DETERMINE DESTINATION NODE N AS FIRST ELEMENT $D_1$ OF CODE FIND OPTIMUM LINKS THROUGH $C_i$, $C_{i+1}$, $C_{i+2}$ TO N PROCEED TO N

BEACON EN ROUTE ? — BEACON EN ROUTE ? — BEACON EN ROUTE ?

VEHICLE ARRIVALS AT D

Fig.7.

EP 0 354 684 A2